# EUROPÄISCHE PATENTSCHRIFT

(11) **EP 4 253 022 B1**
(45) Veröffentlichungstag und Bekanntmachung des Hinweises auf die Patenterteilung: **25.12.2024**
(21) Anmeldenummer: 23153936.2
(22) Anmeldetag: 30.01.2023
(51) Int. Cl.: B29D 30/28, B29D 30/30, B29D 30/08

(54) **MULTISEGMENTROLLE MIT BREITENVERSTELLBAREN DRUCKZONEN FÜR DEN EINSATZ IN REIFENAUFBAUMASCHINEN**
MULTI-SEGMENT ROLLER WITH WIDTH-ADJUSTABLE PRESSURE ZONES FOR USE IN TIRE BUILDING MACHINES
ROULEAU MULTI-SEGMENTS AVEC ZONES DE PRESSION RÉGLABLES EN LARGEUR POUR UNE UTILISATION DANS DES MACHINES DE CONFECTION DE PNEUS

(30) Priorität: 15.03.2022 DE 102022202565
(43) Veröffentlichungstag der Anmeldung: 04.10.2023
(73) Patentinhaber: Continental Reifen Deutschland GmbH, 30175 Hannover (DE)
(72) Erfinder: Meier, Marvin, 30165 Hannover (DE); Gümmer, Oliver, 30165 Hannover (DE); Schischke, Henrik, 30165 Hannover (DE)
(74) Vertreter: Continental Corporation

(56) Entgegenhaltungen:
- EP-A1- 3 130 455
- EP-A1- 3 768 503
- EP-B1- 3 768 503
- DE-U1- 29 681 273

## Beschreibung

Die Erfindung betrifft eine Multisegmentrolle für den Einsatz als Applizierungsrolle in einer Reifenaufbaumaschine sowie eine zugehörige Reifenaufbaumaschine. Darüber hinaus betrifft die Erfindung ein Verfahren zur Herstellung eines Fahrzeugreifenrohlings mit einer entsprechenden Multisegmentrolle oder einer entsprechenden Reifenaufbaumaschine und ein hierauf aufbauendes Verfahren zur Herstellung eines Fahrzeugreifens. Offenbart wird zudem die Verwendung einer entsprechenden Multisegmentrolle oder einer entsprechenden Reifenaufbaumaschine bei der Herstellung eines Fahrzeugreifenrohlings.

Die Fertigung moderner Fahrzeugluftreifen erfolgt zumeist auf sogenannten Reifenaufbaumaschinen, welche als eines der zentralen Elemente eine Reifenaufbautrommel umfassen. Auf dieser Reifenaufbautrommel werden die Fahrzeugluftreifen zumeist Lage für Lage aufgebaut, wobei sequentiell beispielsweise Karkasslagen, Gürtellagen und final der Laufstreifen aufgebracht werden. Zum Aufbringen dieser zumeist strangförmigen Reifenkomponenten werden typischerweise kugelgelagerte Rollen am vorderen Ende des Zubringers eingesetzt. Diese Rollen führen die Reifenkomponente während der Applikation und drücken sie gleichzeitig mit einer definierten Kraft gegen die Reifenaufbautrommel bzw. die bereits auf der Reifenaufbautrommel angeordneten sonstigen Reifenkomponenten. Dieser Teil der Reifenaufbaumaschine wird vom Fachmann entsprechend auch als Applizierungsrolle bezeichnet, der mit Blick auf die Qualität der herstellbaren Fahrzeugreifenrohlinge eine große Bedeutung zukommt.

Die regelmäßig strangförmigen Reifenkomponenten werden bei der Herstellung des Fahrzeugreifenrohlings nämlich um die Reifenaufbautrommel herumgeführt, wobei zum Herstellen des Ringschlusses die Verbindungsstelle zwischen den Enden der strangförmigen Reifenkomponente geschlossen werden muss, was regelmäßig händisch erfolgt. Dieser Vorgang, bei dem der sogenannte Spleiß zwischen den Enden der Reifenkomponente erzeugt wird, wird auch als Spleißen bezeichnet. Zum Erhalt eines hochwertigen Spleißes ist nicht nur die präzise Abmessung der eingesetzten Reifenkomponenten nötig, sondern auch ein optimales Aufbringen der Reifenkomponenten auf die Reifenaufbautrommel, wobei die Applizierungsrolle einen maßgeblichen Beitrag leistet.

Die auf der Reifenaufbautrommel bei der Herstellung von Fahrzeugreifenrohlingen erzeugten Lagenaufbauten weisen häufig eine unregelmäßige Kontur mit Bereichen unterschiedlicher Dicke auf. Gleichzeitig verfügen häufig auch die strangförmigen Reifenkomponenten, welche zugeführt werden, über ein ungleichmäßiges Dickenprofil, wobei sich quer zur Längsrichtung der strangförmigen Reifenkomponenten auch weitere Materialeigenschaften ändern können, beispielweise bei mehrkomponentigen Laufstreifen, deren Kautschukmischungen unterschiedliche E-Module aufweisen.

Der Einsatz von einfachen, einstückigen Applizierungsrollen ist angesichts dieses Umstandes häufig nicht ausreichend, um die zugeführten strangförmigen Reifenkomponenten optimal aufzubringen. Zur Optimierung des Applizierungsschrittes wurden im Stand der Technik zum Applizieren bzw. Anrollen von strangförmigen Reifenkomponenten Vorrichtungen mit zwei oder mehr separaten Rollen vorgeschlagen, wie es beispielsweise in der JP 2012192684 A oder der JP 2014012342 A offenbart wird. Auch wenn entsprechende Vorrichtungen in vielen als Verbesserung gegenüber den einfachen Rollen wahrgenommen wurden, werden sie hinsichtlich der zu erreichenden Aufbringqualität häufig immer noch als unzureichend empfunden.

Aus diesem Grund wurden sogenannte Multisegmentrollen entwickelt, welche über eine Vielzahl von nebeneinander angeordneten Trägerscheiben verfügen, auf denen kugelgelagerte Rollen laufen können, wobei die Multisegmentrollen dazu eingerichtet sind, dass die einzelnen Trägerscheiben quer zur Längsrichtung der Multisegmentrolle gegeneinander verschoben werden können, sodass es möglich ist, durch gezielte Verstellung der einzelnen Scheiben ein spezifisches Druckprofil über die Breite des Applizierungsrolle zu erzeugen, die exakt auf die Materialbeschaffenheit des strangförmigen Elements bzw. auf die Kontur der unterliegenden Reifenkomponenten auf der Reifenaufbautrommel abgestimmt werden kann.

Eine solche Multisegmentrolle ist beispielsweise in der DE 29681273 U1 offenbart. Mit diesen an unterschiedliche Reifenkomponenten anpassbaren Multisegmentrollen kann der Anpressdruck bei der Applikation präzise eingestellt werden, sodass regelmäßig eine gute Spleißqualität erreicht wird, ohne dass die eingesetzten Arbeitskräfte die strangförmige Reifenkomponente händisch ablösen und zusätzlich dehnen müssen, was zu einer Verschlechterung der Leistungseigenschaften der Fahrzeugluftreifen führen kann, die insbesondere bei Premiumreifen inakzeptabel wäre.

Auch wenn die aus dem Stand der Technik bekannten Multisegmentrollen in vielen Fällen eine gute Applikation von strangförmigen Reifenkomponenten erlauben, haben die Erfinder erkannt, dass diese Systeme insbesondere hinsichtlich der Ansteuerung und der Konzeption der zum Verschieben der Scheiben eingesetzten Technik verbesserungswürdig sind. Insbesondere setzen die aus dem Stand der Technik bekannten Multisegmentrollen zur pneumatischen Verstellung der Trägerscheiben zumeist auf sehr komplexe pneumatische Systeme. Je nach der Ausgestaltung der Multisegmentrollen werden einzelne Trägerscheiben individuell mit einem separaten Druckmediumskanal verbunden oder mehrere Trägerscheiben werden als Gruppe von Scheiben über einen einzelnen Druckmediumskanal gesteuert und sind entsprechend nicht separat von den anderen Trägerscheiben der Gruppe einstellbar.

Im Fall der separaten Ansteuerung sämtlicher Trägerscheiben ergibt sich eine Multisegmentrolle, deren Trägerstruktur in der Herstellung sehr aufwendig ist, da sie eine große Vielzahl an Druckmediumkanälen und Versorgungsbohrungen umfasst. Dies erfordert regelmäßig eine große Zahl von Fluidleitungen und separaten pneumatischen Systemen für alle Trägerscheiben. Auch wenn in diesem Aufbau prinzipiell eine hohe Flexibilität bei der Einstellung des Druckprofils erreicht werden kann, führt der apparative Aufbau in der Umsetzung der Pneumatik regelmäßig dazu, dass die Zahl der Trägerscheiben reduziert und/oder deren Breite vergrößert wird, um die Komplexität des Systems zu reduzieren, sodass in der Praxis doch nur gröbere Druckprofile eingestellt werden können. Somit wird im Endeffekt eine Multisegmentrolle erhalten, die mit solchen Systemen vergleichbar ist, in denen mehrere Trägerscheiben über einen einzigen Druckmediumskanal gesteuert werden, wodurch sich ebenfalls ein Verlust an Auflösung in der genauen Einstellung des Druckprofils ergibt. Bei den aus dem Stand der Technik bekannten Multisegmentrollen wird zudem häufig als nachteilig empfunden, dass durch die häufig vergleichsweise breiten Trägerscheiben und/oder die zu Gruppen zusammengefasst und gemeinsam gesteuerten Trägerscheiben, bestimmte feinere Abgrenzungen im Druckprofil nicht umgesetzt werden können und die Möglichkeit zur einfachen Anpassung des Druckprofils, beispielsweise im laufenden Betrieb, durch die Zahl der Druckmediumskanäle bzw. die Gruppierung von Trägerscheiben limitiert ist.

Insgesamt sind die aus dem Stand der Technik bekannten Multisegmentrollen nach Einschätzung der Erfinder nicht hinreichend geeignet, um beispielsweise eine im Wesentlichen vollständig automatisierte Applizierung von Reifenbauteilen mit einem automatischen Spleißen zu gewährleisten, zumindest nicht für sämtliche der verschiedenen strangförmigen Reifenkomponenten, welche im Zuge der Herstellung eines Fahrzeugreifenrohlings zugeführt werden müssen, und zumindest nicht in solchen Fällen, in denen die Zahl der separaten Druckmediumskanäle und der individuell angesteuerten pneumatischen Trägerscheiben in einem Rahmen verbleibt, der für den Einsatz im Umfeld einer Reifenaufbaumaschine noch akzeptabel ist.

Die primäre Aufgabe der vorliegenden Erfindung war es, die vorstehend beschriebenen Nachteile des Standes der Technik auszuräumen oder zumindest abzuschwächen.

Insbesondere war es die Aufgabe der vorliegenden Erfindung, eine Multisegmentrolle anzugeben, welche eine präzise Applizierung von strangförmigen Reifenkomponenten auf einer Reifenaufbaumaschine ermöglicht.

Insoweit war es die Aufgabe der vorliegenden Erfindung, dass die anzugebende Multisegmentrolle eine besonders präzise Einstellung des beim Anrollen wirkenden Druckprofils erlauben sollte, das wünschenswerterweise schnell und auch während des laufenden Fertigungsbetriebs anpassbar sein sollte, sodass eine Anpassung des Druckprofils an verschiedene strangförmige Reifenkomponenten möglich wird.

Insoweit war es auch eine Aufgabe der vorliegenden Erfindung, dass die Applizierung von strangförmigen Reifenkomponenten mit der anzugebenden Multisegmentrolle derart präzise erfolgen kann, dass ein händisches Korrigieren des Spleißes durch die eingesetzten Arbeitskräfte zuverlässig verhindert werden kann, um damit die Reifenqualität zu steigern.

Eine besondere Aufgabe der vorliegenden Erfindung bestand darin, dass die anzugebende Multisegmentrolle derart ausgestaltet werden sollte, dass diese mit einer gegenüber dem Stand der Technik deutlich einfacheren pneumatischen Anordnung betrieben werden kann. Hierbei war es wünschenswert, dass die große Flexibilität in der Einstellung der Anrollkontur erreicht werden kann, obwohl die Zahl der Druckmediumskanäle und der zugehörigen Versorgungsbohrungen gegenüber dem Stand der Technik reduziert werden kann. Insoweit war es wünschenswert, dass auch die Zahl der benötigten verschiedenen Arbeitsdrücke sowie der Fluidleitungen im Umfeld der Reifenaufbaumaschine reduziert werden sollte.

Vor diesem Hintergrund war es eine Aufgabe der vorliegenden Erfindung, dass die Multisegmentrolle besonders einfach herzustellen sein sollte und es erlauben sollte, den Wartungsaufwand im Betrieb zu reduzieren.

Die Erfinder der vorliegenden Erfindung haben nunmehr erkannt, dass sich die vorstehend beschriebenen Aufgaben überraschenderweise lösen lassen, wenn eine Multisegmentrolle eingesetzt wird, wie sie in den Ansprüchen definiert ist. In diesem Grundaufbau werden die Kolbenausnehmungen, in welchen die Hubkolben zur Bewegung der Trägerscheiben angeordnet sind, grundsätzlich über die gleiche Fluidführungsausnehmung mit Arbeitsfluid versorgt. Statt einer separaten Pneumatik für sämtliche Trägerscheiben bzw. für Gruppen von Trägerscheiben werden in der Fluidführungsausnehmung Dichtungselemente vorgesehen, die die Fluidführungsausnehmung in verschiedene Druckbereiche unterteilen, wobei die Dichtungselemente so ausgeführt werden, dass die Position der Dichtungselemente und damit die Abmessungen der Druckbereiche in der Fluidführungsausnehmung verändert werden können. Hierdurch ist es in vorteilhafter Weise möglich, durch die einfache Positionsänderung der Dichtungselemente die Abmessungen der Druckbereiche zwangslos einzustellen, sodass die Hubkolben in einem Druckbereich jeweils den gleichen Druck erfahren. Die Zahl der Versorgungsbohrungen, d. h. der Fluideinlässe, muss vorteilhafterweise nur noch der Zahl der Druckbereiche entsprechen, die vorgesehen werden sollen. Hierbei haben die Erfinder erkannt, dass überraschenderweise bereits mit lediglich drei Druckbereichen, d. h. einer Multisegmentrolle mit einer in drei Bereiche unterteilten Struktur, ausgezeichnete Ergebnisse in der Reifenherstellung erzielt werden können, wenn die Breite der Druckbereiche und damit die Breite der Bereiche des Andruckprofils, so genau und schnell angepasst werden kann, wie es mit erfindungsgemäßen Multisegmentrollen möglich ist. Hierdurch ist vorteilhafterweise eine signifikante Verringerung der Komplexität der pneumatischen Systeme und eine Reduktion der notwendigen Fluidleitungen möglich. Zudem sind entsprechende Multisegmentrollen besonders einfach zu fertigen und durch die verringerte Anzahl von Teilen besonders wartungsarm.

Die vorstehend genannten Aufgaben werden entsprechend durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Reifenaufbaumaschinen, Verfahren und Verwendungen ergeben sich aus den Merkmalen bevorzugter Multisegmentrollen.

Die Erfindung betrifft eine Multisegmentrolle für den Einsatz als Applizierungsrolle in einer Reifenaufbaumaschine, mit einer Trägerstruktur umfassend:
a) einen Grundkörper, umfassend:
   i) eine Fluidführungsausnehmung,
   ii) fünf oder mehr Kolbenausnehmungen, welche jeweils fluidleitend mit der Fluidführungsausnehmung verbunden sind, und
   iii) drei oder mehr Fluideinlässe, welche jeweils fluidleitend mit der Fluidführungsausnehmung verbunden sind,
b) fünf oder mehr Hubkolben, welche jeweils so in den Kolbenausnehmungen angeordnet sind, dass sie in Folge eines Druckanstiegs in der Fluidführungsausnehmung eine Hubbewegung ausführen können, und
c) fünf oder mehr Trägerscheiben, welche jeweils eine innenliegende Aussparung aufweisen,

wobei sich der Grundkörper so durch die innenliegenden Aussparungen der Trägerscheiben erstreckt, dass die Trägerscheiben jeweils auf Höhe zumindest einer Kolbenausnehmung angeordnet sind, wobei die innenliegenden Aussparungen so bemessen sind, dass die Position der Trägerscheiben relativ zum Grundkörper jeweils durch die Hubbewegung zumindest eines der Hubkolben verändert werden kann,
wobei die Multisegmentrolle in der Fluidführungsausnehmung zwei oder mehr Dichtungselemente zur fluiddichten Abdichtung der Fluidführungsausnehmung umfasst, durch die die Fluidführungsausnehmung in drei oder mehr voneinander getrennte Druckbereiche unterteilt wird, die jeweils mit zumindest einem der Fluideinlässe verbunden sind, sodass die Kolbenausnehmungen jeweils mit einem der Druckbereiche fluidleitend verbunden sind, wobei die Multisegmentrolle dazu eingerichtet ist, dass die Position der zwei oder mehr Dichtungselemente in der Fluidführungsausnehmung reversibel und zerstörungsfrei verändert werden kann, um die Abmessungen der Druckbereiche zu verändern.

Die erfindungsgemäße Multisegmentrolle ist für den Einsatz als Applizierungsrolle in einer Reifenaufbaumaschine geeignet, wobei der vorteilhafte Aufbau der Multisegmentrolle nach Einschätzung der Erfinder prinzipiell auch Anwendungsfelder in weiteren Vorrichtungen und anderen Industrien eröffnen könnte.

Das Kernstück der erfindungsgemäßen Multisegmentrolle ist die Trägerstruktur, da diese die spezifische Funktionalität bedingt. In der Anwendung werden auf den Trägerscheiben der Trägerstruktur in den meisten Fällen kugelgelagerte Rollen vorgesehen sein, die beim Anrollen um die nicht-rotierenden Trägerscheiben laufen. Für die meisten Fälle relevant ist somit eine erfindungsgemäße Multisegmentrolle, wobei die Trägerscheiben dazu eingerichtet sind, jeweils einen drehbar gelagerten, bevorzugt mittels Kugellager drehbar gelagerten, Außenring zu tragen. Für die meisten Fälle relevant ist entsprechend ebenfalls eine erfindungsgemäße Multisegmentrolle, wobei die Multisegmentrolle eine Vielzahl von Außenringen umfasst, die jeweils drehbar auf den Trägerscheiben der Trägerstruktur angeordnet sind.

Die Trägerstruktur umfasst einen Grundkörper, in dem die Kolbenausnehmungen angeordnet sind, in denen die Hubkolben angeordnet werden, welche durch ihre Hubbewegung die Trägerscheiben relativ zum Grundkörper bewegen. Für die meisten Fälle relevant ist eine erfindungsgemäße Multisegmentrolle, wobei der Grundkörper ein länglicher Grundkörper ist, dessen Längsrichtung parallel zur Flächennormalen der Trägerscheiben verläuft. Für die meisten Fälle relevant ist ebenfalls eine erfindungsgemäße Multisegmentrolle, wobei in jeder der Kolbenausnehmung jeweils ein Hubkolben angeordnet ist. Für die meisten Fälle relevant ist zur möglichst verlustfreien Umsetzung der Hubbewegung zudem eine erfindungsgemäße Multisegmentrolle, wobei die Hubkolben so in den Kolbenausnehmungen angeordnet sind, dass die Kolbenausnehmungen durch die Hubkolben fluiddicht verschlossen werden.

Die Kolbenausnehmungen sind jeweils mit der Fluidführungsausnehmung verbunden, die im Grundkörper verläuft. Ohne Unterteilung der Fluidführungsausnehmung in unterschiedliche Druckbereiche durch die Dichtungselemente würden somit sämtliche Hubkolben in den Kolbenausnehmungen den in der Fluidführungsausnehmung herrschenden Druck erfahren. Die Trägerstruktur umfasst Trägerscheiben, die um den Grundkörper herum verlaufen. Im Inneren der Trägerscheiben sind dabei Aussparungen vorgesehen, die größer sind als der Querschnitt des Grundkörpers, sodass die Trägerscheiben relativ zum Grundkörper beweglich sind und die Position der Trägerscheiben relativ zum Grundkörper durch die Hubbewegung der Hubkolben verändert werden kann. Für die meisten Fälle relevant ist dabei eine erfindungsgemäße Multisegmentrolle, wobei die Trägerscheiben parallel zueinander angeordnet sind.

Ausgehend hiervon umfasst die erfindungsgemäße Multisegmentrolle in der Fluidführungsausnehmung nunmehr zumindest zwei Dichtungselemente, welche die Fluidführungsausnehmung lokal fluiddicht abdichten. In Übereinstimmung mit dem fachmännischen Verständnis bedeutet dies selbstverständlich nicht, dass die Dichtungselemente die Fluidführungsausnehmung gänzlich fluiddicht von der Umwelt abschirmen, sondern lediglich, dass an der Position der Dichtungselemente keine Fluidleitung aus einem Teil der Fluidführungsausnehmung an dem Dichtungselement vorbei in den anderen Teil der Fluidführungsausnehmung erfolgen kann. Dies bedeutet, dass durch die zwei oder mehr Dichtungselemente drei oder mehr Druckbereiche gebildet werden, wobei entlang der Fluidführungsausnehmung kein Fluidaustausch aus einem Druckbereich in den nebenliegenden Druckbereich möglich ist. Die Kolbenausnehmung und damit die Hubkolben sind jeweils mit einem der Druckbereiche fluidleitend verbunden, wobei für jeden der drei Druckbereiche zumindest ein Fluideinlass, beispielsweise in der Form einer Versorgungsbohrung, vorgesehen ist, durch den Arbeitsfluid in den jeweiligen Druckbereich eingeführt werden kann. Beispielhaft ist insoweit eine erfindungsgemäße Multisegmentrolle, wobei sich die Fluideinlässe als Ausnehmungen von den Seitenbereichen in den Zentralbereich des Grundkörpers erstrecken, beispielsweise parallel zur Fluidführungsausnehmung, wobei die fluidleitende Verbindung zwischen den Fluideinlässen und der Fluidführungsausnehmung beispielsweise durch sich von der Fluidführungsausnehmung zur Oberfläche des Grundkörpers erstreckende seitliche Bohrungen erfolgen kann, deren äußere Öffnung dann durch geeignete Dichtungen verschlossen werden kann. Für die meisten Fälle relevant ist ebenfalls eine erfindungsgemäße Multisegmentrolle, wobei zumindest an einem der Fluideinlässe, bevorzugt an sämtlichen Fluideinlässen, Ventile angeordnet sind.

Der Einsatz der erfindungsgemäßen Multisegmentrolle erfolgt nun derart, dass die Position der Dichtungselemente in der Fluidführungsausnehmung so angepasst wird, dass die Abmessungen der Druckbereiche zu der zu applizierenden strangförmigen Reifenkomponente passen. Anschließend werden die Druckbereiche mit verschiedenen Drücken beaufschlagt, die beim Anrollen das gewünschte Druckprofil in dem zu einem Druckbereich gehörenden Abschnitt realisieren. Dies lässt sich in einem Beispiel verdeutlichen. Angenommen, es soll ein mehrkomponentiger Laufstreifen appliziert, welcher aus drei unterschiedliche harten Kautschukmischungen besteht, die entlang der Breite horizontal verteilt sind und jeweils 20 %, 50 % und 30 % der Breite ausmachen, und zu dessen gleichmäßigen anrollen drei verschiedene Drücke notwendig sind. In diesem Fall kann in einer erfindungsgemäßen Multisegmentrolle mit beispielsweise zehn jeweils von einem Hubkolben bewegten Trägerscheiben die Position der zwei Dichtungselemente in der Fluidführungsausnehmung so eingestellt werden, dass die äußeren zwei Trägerscheiben dem ersten Druckbereich zugeordnet werden, wohingegen die nächsten fünf Trägerscheiben über die Hubkolben den Druck im zweiten Druckbereich erfahren und die äußeren drei Trägerscheiben dem dritten Druckbereich zugeordnet werden, um das Verhältnis von 20/50/30 im Druckprofil umzusetzen. Über drei Einlässe wird nunmehr der Druck in den jeweiligen Druckbereichen der Fluidführungsausnehmung eingestellt und der mehrkomponentige Laufstreifen appliziert, wobei ein Druckprofil erhalten wird, das spezifisch auf die Beschaffenheit des Laufstreifens abgestimmt wird.

Soll bei der Herstellung eines anderen Fahrzeugreifens beispielsweise ein genau entgegengesetzt aufgebauter Laufstreifen appliziert werden, kann die erfindungsgemäße Multisegmentrolle leicht angepasst werden, indem lediglich die Position der Dichtungselemente so verschoben wird, dass nunmehr drei Hubkolben im ersten Druckbereich, fünf Hubkolben im zweiten Druckbereich und zwei Hubkolben im dritten Druckbereich liegen. Diese spezifische Konstruktion bedeutet in anderen Worten, dass die erfindungsgemäße Multisegmentrolle dazu eingerichtet ist, durch Veränderung der Position der Dichtungselemente in der Fluidführungsausnehmung bei Beaufschlagung der Fluidführungsausnehmung mit einem Arbeitsfluid mit unterschiedlichen Arbeitsdrücken zumindest drei Bereiche auszubilden, in denen die Trägerscheiben relativ zum Grundkörper eine unterschiedliche Position aufweisen.

Der Fachmann versteht, dass sich das Druckprofil umso feiner an die Beschaffenheit einer Reifenkomponente anpassen lässt, je mehr Trägerscheiben die Multisegmentrolle in einem vorgegebenen Längenabschnitt umfasst, so dass eine höhere Auflösung möglich ist. Hierdurch steigt auch die Zahl der Kolbenausnehmungen und Hubkolben an. Bevorzugt ist somit eine erfindungsgemäße Multisegmentrolle, wobei der Grundkörper 10 oder mehr, bevorzugt 16 oder mehr, besonders bevorzugt 32 oder mehr, ganz besonders bevorzugt 34, Kolbenausnehmungen, umfasst. Bevorzugt ist ebenfalls eine erfindungsgemäße Multisegmentrolle, wobei die Trägerstruktur 10 oder mehr, bevorzugt 16 oder mehr, besonders bevorzugt 32 oder mehr, ganz besonders bevorzugt 34, Hubkolben umfasst. Bevorzugt ist zudem eine erfindungsgemäße Multisegmentrolle, wobei die Trägerstruktur 10 oder mehr, bevorzugt 16 oder mehr, besonders bevorzugt 32 oder mehr, ganz besonders bevorzugt 34, Trägerscheiben umfasst. Besonders bevorzugt werden die Anzahl der entsprechenden Komponenten aufeinander abgestimmt, so dass jeweils die entsprechend bevorzugten Ausgestaltungen kombiniert werden.

Auch wenn es prinzipiell denkbar ist, dass ein Hubkolben zwei benachbarte Trägerscheiben bewegt oder dass eine Trägerscheibe von zwei oder mehr Hubkolben betätigt wird, ist es mit Blick auf ein möglichst effizientes Design und eine hohe Auflösung des Druckprofils bevorzugt, wenn jeder Trägerscheibe ein separater Hubkolben zugewiesen ist. Bevorzugt ist folglich eine erfindungsgemäße Multisegmentrolle, wobei jede Trägerscheibe auf der Höhe genau einer Kolbenausnehmung liegt, sodass die Position jeder Trägerscheibe durch die Hubbewegung genau eines Hubkolbens verändert werden kann. Bevorzugt ist außerdem eine erfindungsgemäße Multisegmentrolle, wobei in Richtung der Hubbewegung oberhalb jeder Kolbenausnehmung jeweils genau eine Trägerscheibe angeordnet ist. Besonders bevorzugt ist insofern eine erfindungsgemäße Multisegmentrolle, wobei die Trägerstruktur die gleiche Anzahl von Kolbenausnehmungen, Hubkolben und Trägerscheiben umfasst.

Für manche Anwendungen mag es vorteilhaft sein, die Trägerscheiben und/oder Hubkolben und/oder Kolbenausnehmungen unterschiedlich auszulegen, beispielsweise hinsichtlich ihrer Größe. Insbesondere mit Blick auf die einfache Herstellbarkeit und Reduktion der benötigten Ersatzteile ist es jedoch explizit bevorzugt, wenn ein Teil dieser Komponenten, bevorzugt sämtliche dieser Komponenten, im Wesentlichen gleichartig ausgebildet werden. Bevorzugt ist entsprechend eine erfindungsgemäße Multisegmentrolle, wobei die Kolbenausnehmungen im Wesentlichen gleichartig ausgebildet sind. Bevorzugt ist außerdem eine erfindungsgemäße Multisegmentrolle, wobei die Hubkolben im Wesentlichen gleichartig ausgebildet sind. Bevorzugt ist überdies eine erfindungsgemäße Multisegmentrolle, wobei die Trägerscheiben und/oder die innenliegenden Aussparungen der Trägerscheiben im Wesentlichen gleichartig ausgebildet sind.

Der Grundkörper kann aus verschiedenen Materialien ausgebildet werden, wobei insbesondere der Einsatz von Kunststoffen eine einfache Fertigung, beispielsweise im Spritzguss, ermöglicht. Nach Einschätzung der Erfinder ist es jedoch besonders vorteilhaft, den Grundkörper aus Metall auszubilden, weil dieser so bei den im Betrieb üblicherweise auftretenden Kräften eine optimierte Haltbarkeit aufweist. Bevorzugt ist demnach eine erfindungsgemäße Multisegmentrolle, wobei der Grundkörper aus Metall ausgebildet ist, bevorzugt aus Aluminium oder Stahl, besonders bevorzugt Stahl.

Der Grundkörper kann hinsichtlich seiner Form an die Bedürfnisse des Anwendungszwecks angepasst werden. Die Erfinder schlagen jedoch vor, dass ein im Wesentlichen rechteckiger Querschnitt, gegebenenfalls mit abgefasten Ecken, für viele Anwendungen Vorteile hat. In diesem Fall können die Aussparungen in den Trägerscheiben nämlich besonders leicht so ausgeführt werden, dass diese sich zumindest teilweise an den Grundkörper anpassen oder anschmiegen, vorteilhafterweise über die gesamte Länge der Hubbewegung hinweg. Hierdurch wird eine besondere Stabilität erreicht und eine ungewollte Rotation der Trägerscheiben zuverlässig verhindert, sodass langfristig ein sicherer Betrieb und ein geringer Verschleiß gewährleistet werden können. Bevorzugt ist also eine erfindungsgemäße Multisegmentrolle, wobei der Grundkörper einen vieleckigen Querschnitt, bevorzugt einen pseudo rechteckigen Querschnitt mit abgefasten Ecken, aufweist. Bevorzugt ist gleichfalls eine erfindungsgemäße Multisegmentrolle, wobei die innenliegenden Aussparungen der Trägerscheiben so bemessen sind, dass die Trägerscheiben den Grundkörper während der gesamten Hubbewegung seitlich kontaktieren und/oder während der gesamten Hubbewegung zum Grundkörper den gleichen Abstand aufweisen. Besonders bevorzugt ist insoweit eine erfindungsgemäße Multisegmentrolle, wobei die innenliegenden Aussparungen der Trägerscheiben so bemessen sind, dass der Grundkörper in der Querschnittsansicht bei minimalem Hub und/oder maximalem Hub abschnittsweise formschlüssig eingefasst wird.

Für die Fluidführungsausnehmung hat es sich als vorteilhaft erwiesen, einen im Wesentlichen kreisförmigen Querschnitt auszuwählen. Entsprechende Fluidführungsausnehmungen sind regelmäßig besonders einfach herzustellen, beispielsweise durch Bohrung, über den Umfang strukturell stabil und wegen der gleichmäßigen Form durch bewegliche Dichtungselemente regelmäßig besonders gut abzudichten. Bevorzugt ist entsprechend eine erfindungsgemäße Multisegmentrolle, wobei die Fluidführungsausnehmung einen im Wesentlichen kreisförmigen Querschnitt aufweist.

Auch wenn es denkbar ist, die Fluidführungsausnehmung gewunden auszuführen und/oder sie beispielsweise quer im Grundkörper anzuordnen, ist es mit Blick auf die Herstellbarkeit und eine möglichst robuste Ausführung bevorzugt, die Fluidführungsausnehmung entlang der Längsrichtung des Grundkörpers anzuordnen, insbesondere da hierdurch die fluidleitende Verbindung zu sämtlichen Kolbenaufnahmen besonders leicht hergestellt werden kann. Bevorzugt ist somit eine erfindungsgemäße Multisegmentrolle, wobei die Fluidführungsausnehmung im Wesentlichen parallel zur Längsrichtung des Grundkörpers verläuft.

Insbesondere bei der Herstellung des Grundkörpers mittels Gieß- und/oder Spritzgussverfahren ist es prinzipiell möglich, die Fluidführungsausnehmung als innenliegenden Hohlraum auszubilden, welcher nur über die Fluideinlässe bzw. die Kolbenausnehmungen zugänglich ist. Bei einer entsprechenden Anordnung kann vorteilhafterweise auf den Einsatz von seitlichen Dichtungselementen zur Abdichtung der Fluidführungsausnehmung nach außen verzichtet werden.

Mit Blick auf eine Herstellbarkeit und eine möglichst leichte Verschiebung der Dichtungselemente in der Fluidführungsausnehmung ist es jedoch bevorzugt, wenn sich die Fluidführungsausnehmung zumindest von einer Seite in den Grundkörper hinein und bevorzugt vollständig durch den Grundkörper hindurch erstreckt. Dies erfordert zwar zur Umsetzung des pneumatischen Systems zumeist eine fluiddichte Abdichtung der Fluidführungsausnehmung in den Seitenbereichen, ermöglicht jedoch besonders leicht die Umsetzung der Verstellbarkeit der Dichtungselemente in der Fluidführungsausnehmung, beispielsweise mittels Gewindeanordnungen, wie sie nachfolgend beschrieben sind. Bevorzugt ist insoweit eine erfindungsgemäße Multisegmentrolle, wobei sich die Fluidführungsausnehmung als durchgehende Ausnehmung durch den Grundkörper erstreckt. Regelmäßig sinnvoll ist hierbei eine erfindungsgemäße Multisegmentrolle, wobei die Öffnungen der Fluidführungsausnehmung, bei denen es sich nicht um Kolbenausnehmungen oder Fluideinlässe handelt, mit Verschlusselementen fluiddicht verschlossen sind, wobei dieser Verschluss auch über Dichtungselemente im Inneren der Fluidführungsausnehmung erfolgen kann.

Den Erfindern ist es gelungen, für die Kolbenausnehmungen besonders geeignete Anordnungen zu identifizieren, wobei sich eine möglichst einheitliche Anordnung der Kolbenausnehmungen und damit auch der Hubkolben als vorteilhaft erwiesen hat, auch wenn es zumindest theoretisch für manche Anwendungen interessant sein könnte, wenn einzelne Trägerscheiben durch einen anders orientierten Hubkolben auch in eine andere Richtung verschoben werden können, als die sonstigen Trägerscheiben. Bevorzugt ist nämlich eine erfindungsgemäße Multisegmentrolle, wobei die Kolbenausnehmungen parallel zueinander angeordnet sind. Bevorzugt ist auch eine erfindungsgemäße Multisegmentrolle, wobei die Öffnungen der Kolbenausnehmungen auf der gleichen Seite des Grundkörpers liegen. Bevorzugt ist gleichfalls eine erfindungsgemäße Multisegmentrolle, wobei die Kolbenausnehmungen parallel zur Querschnittsfläche des Grundkörpers angeordnet sind. Bevorzugt ist überdies eine erfindungsgemäße Multisegmentrolle, wobei die Kolbenausnehmungen orthogonal zu der Fluidführungsausnehmung verlaufen.

Nach Einschätzung der Erfinder ist es zweckmäßig, die Kolbenausnehmungen weitgehend mittig im Grundkörper anzuordnen und an den Seitenbereichen einen Überstand vorzusehen, der die Handhabung der Multisegmentrolle und die Anbringung von weiteren Komponenten, beispielsweise Steuerungseinheiten oder Teilen des Fluidführungssystems, erleichtert. Bevorzugt ist entsprechend eine erfindungsgemäße Multisegmentrolle, wobei die Kolbenausnehmungen im Zentralbereich des Grundkörpers liegen, bevorzugt im Bereich von 20 bis 80 %, bevorzugt 30 bis 70 %, besonders bevorzugt 40 bis 60%, der Länge des Grundkörpers entlang der Längsrichtung.

Die Erfinder haben erkannt, dass es besonders vorteilhaft ist, die Kolbenausnehmungen und damit die Hubkolben in mehreren Reihen anzuordnen, besonders wenn die Elemente gegeneinander versetzt angeordnet werden. Hierdurch ist es aus fertigungstechnischer Sicht möglich, entlang der Längsrichtung eine besonders große Zahl von Hubkolben anzuordnen, ohne die strukturelle Integrität des Grundkörpers zu stark zu belasten. Hierdurch ist es vorteilhafterweise möglich, in einem gegebenen Längenabschnitt eine größere Anzahl von separat ansteuerbaren Trägerscheiben vorzusehen. Bevorzugt ist daher eine erfindungsgemäße Multisegmentrolle, wobei die Kolbenausnehmungen in zwei oder mehr Reihen, bevorzugt in zwei oder mehr Reihen von äquidistant voneinander beabstandeten Kolbenausnehmungen, angeordnet sind, wobei die Kolbenausnehmungen benachbarter Reihen bevorzugt zueinander versetzt angeordnet sind.

Die Erfinder haben erkannt, dass es zur Umsetzung der vorliegenden Erfindung vorteilhaft ist, wenn die Ausnehmungen, über die jeweils die fluidleitende Verbindung zwischen der Kolbenausnehmung und der Fluidführungsausnehmung hergestellt wird, möglichst klein ausgeführt werden. Hierdurch können schmalere Dichtungselemente verwendet werden, ohne dass das Risiko besteht, dass ein entsprechendes Verbindungsloch bei ungünstiger Positionierung des Dichtungselements gleichzeitig mit zwei verschiedenen Druckbereichen in Verbindung steht und damit einen unerwünschten Druckausgleich ermöglicht. Nach Einschätzung der Erfinder ist es entsprechend vorteilhaft, wenn sich die Kolbenausnehmungen in Richtung der Fluidführungsausnehmung nach unten hin verjüngen und nur eine kleine Durchlassöffnung vorgesehen wird. Bevorzugt ist insofern eine erfindungsgemäße Multisegmentrolle, wobei die Kolbenausnehmungen sich in Richtung der Fluidführungsausnehmung verjüngen. Bevorzugt ist zusätzlich oder alternativ eine erfindungsgemäße Multisegmentrolle, wobei die Kolbenausnehmungen jeweils über genau eine Durchlassöffnung mit der Fluidführungsausnehmung verbunden sind, wobei die Durchlassöffnungen bevorzugt jeweils an einem Ende der Kolbenausnehmungen liegen.

Den Erfindern ist es gelungen, geeignete Dimensionen für erfindungsgemäße Multisegmentrollen zu identifizieren, mit denen Multisegmentrollen erhalten werden, die für den Einsatz in typischen Reifenaufbaumaschinen besonders geeignet sind. Bevorzugt ist insoweit eine erfindungsgemäße Multisegmentrolle, wobei die Öffnungen der Kolbenausnehmungen einen Durchmesser im Bereich von 6 bis 20 mm, bevorzugt im Bereich von 8 bis 10 mm, aufweisen. Bevorzugt ist darüber hinaus eine erfindungsgemäße Multisegmentrolle, wobei die Kolbenausnehmungen in jede Richtung zur jeweils nächsten Kolbenausnehmungen einen Abstand im Bereich von 6 bis 20 mm, bevorzugt im Bereich von 8 bis 10 mm, aufweisen. Bevorzugt ist außerdem eine erfindungsgemäße Multisegmentrolle, wobei die Trägerscheiben einen Radius im Bereich von 30 bis 200 mm, bevorzugt im Bereich von 40 bis 80 mm, aufweisen. Bevorzugt ist auch eine erfindungsgemäße Multisegmentrolle, wobei die Trägerscheiben eine Dicke im Bereich von 5 bis 30 mm, bevorzugt im Bereich von 6 bis 12 mm, aufweisen.

Darüber hinaus schlagen die Erfinder für die Trägerscheiben bzw. die Hubbewegung Bereiche vor, mit denen nach Einschätzung der Erfinder Multisegmentrollen erhalten werden können, die für die in der Reifenfertigung üblicherweise eingesetzten strangförmigen Reifenkomponenten eine hinreichende Anpassung des Druckprofils ermöglichen. Insoweit ist eine erfindungsgemäße Multisegmentrolle bevorzugt, wobei die Hubkolben in Folge eines Druckanstiegs in der Fluidführungsausnehmung eine Hubbewegung im Bereich von 5 bis 60 mm, bevorzugt im Bereich von 15 bis 45 mm, ausführen können. Bevorzugt ist zusätzlich eine erfindungsgemäße Multisegmentrolle, wobei die innenliegenden Aussparungen der Trägerscheiben so bemessen sind, dass die Position der Trägerscheiben relativ zum Grundkörper um eine Strecke im Bereich von 0,2*h bis 1 *h, bevorzugt im Bereich von 0,5*h bis 1 *h, besonders bevorzugt im Bereich von 0,7*h bis 1 *h, verändert werden kann, wobei h dem maximalen Hub der Hubkolben in den Kolbenausnehmungen entspricht.

Um eine möglichst gute Fluidversorgung zu gewährleisten, ist es nach Einschätzung der Erfinder sinnvoll, wenn die Fluideinlässe auf einer anderen Seite des Grundkörpers angeordnet sind, als die Kolbenausnehmungen, wobei es die vergleichsweise geringe Zahl an notwendigen Fluideinlässen auch ermöglicht, die entsprechenden Bohrungen ohne großen Platzbedarf in den Randbereichen des Grundkörpers vorzusehen. Bevorzugt ist daher eine erfindungsgemäße Multisegmentrolle, wobei die Öffnungen der Fluideinlässe in eine andere Richtung weisen als die Öffnungen der Kolbenausnehmungen und/oder an einer anderen Seite des Grundkörpers liegen als die Öffnungen der Kolbenausnehmungen.

Zumindest prinzipiell ist es denkbar, dass die Trägerscheiben entlang der Längsrichtung des Grundkörpers voneinander beabstandet sind, sodass zwischen ihnen ein Spalt verbleibt. Nach Einschätzung der Erfinder ist es jedoch ein Vorteil der vorliegenden Erfindung, dass auch eng nebeneinander liegende Trägerscheiben und die zugehörigen Hubkolben zuverlässig verschiedenen Druckbereichen zugeordnet werden können. Um eine möglichst gleichmäßige Druckapplikation auf die strangförmige Reifenkomponente zu gewährleisten ist es deshalb explizit bevorzugt, die Trägerscheiben möglichst eng nebeneinander anzuordnen Entsprechend ist eine erfindungsgemäße Multisegmentrolle bevorzugt, wobei die Trägerscheiben so angeordnet sind, dass die Trägerscheiben im Wesentlichen auf Stoß liegen.

Um einen möglichst sicheren Betrieb und einen möglichst unmittelbaren Kraftübertrag von den Hubkolben auf die Trägerscheibe zu ermöglichen, schlagen die Erfinder vor, die Trägerscheiben mit den Enden der Hubkolben zu verbinden, sodass eine freie Bewegung der Trägerscheiben relativ zu den Hubkolben verhindert wird und eine besonders präzise Anpassung des Druckprofils realisiert wird. Bevorzugt ist folglich eine erfindungsgemäße Multisegmentrolle, wobei die innenliegenden Aussparungen der Trägerscheiben jeweils ein erstes Fixierelement umfassen und wobei die für den Kontakt mit den Trägerscheiben vorgesehenen Enden der Hubkolben jeweils ein zweites Fixierelement umfassen, wobei die Trägerscheiben mit den Hubkolben über die ersten Fixierelemente und die zweiten Fixierelemente verbunden sind, bevorzugt formschlüssig und/oder kraftschlüssig, besonders bevorzugt formschlüssig.

Nach Einschätzung der Erfinder kann es als besonderer Vorteil erfindungsgemäßer Multisegmentrollen gesehen werden, dass die leichte und präzise Einstellbarkeit der Druckbereiche es ermöglicht, bereits mit lediglich drei unterschiedlichen Druckbereichen und entsprechend drei Druckzonen für alle im Reifenaufbauprozess auftretenden strangförmigen Reifenkomponenten eine ausgezeichnete Applikationsleistung zu erzielen. Vor diesem Hintergrund ist diese besonders effiziente und wartungsarme Variante, die insbesondere mit lediglich drei Fluidleitungen auskommt, auch für sämtliche Ausführungsformen explizit bevorzugt. Die Erfinder haben gefunden, dass die apparativen Vorteile einer Ausführung mit lediglich zwei Dichtelementen die Vorteile von Multisegmentrollen mit vier oder mehr Druckbereichen in vielen Fällen mehr als aufwiegen. Bevorzugt ist demnach eine erfindungsgemäße Multisegmentrolle, wobei die Multisegmentrolle in der Fluidführungsausnehmung genau zwei Dichtungselemente umfasst. Bevorzugt ist entsprechend ebenfalls eine erfindungsgemäße Multisegmentrolle, wobei die Fluidführungsausnehmung durch die Dichtungselemente in genau drei voneinander getrennte Druckbereiche unterteilt wird.

Grundsätzlich sind in erfindungsgemäßen Multisegmentrollen eine Vielzahl von möglichen Dichtungselementen vorstellbar, sofern deren Position in der Fluidführungsausnehmung reversibel und zerstörungsfrei verändert werden kann. Nach Einschätzung der Erfinder sind jedoch vor allen Dichtungskolben als Dichtungselemente besonders bevorzugt. Solche Dichtungskolben sind längliche Elemente, beispielsweise mit rundem Querschnitt, welche in der Fluidführungsanordnung angeordnet werden können und welche zumindest abschnittsweise so ausgeführt sind, dass sie die Fluidführungsausnehmung fluiddicht verschließen, beispielsweise durch einen Formschluss oder separate Dichtungskomponenten, beispielsweise Dichtungsringe. Hierbei sind Ausführungsformen, welche die fluiddichte Abdichtung über einen Formschluss realisieren, gegenüber dem Einsatz von separaten Dichtungskomponenten explizit bevorzugt, da hierdurch der Wartungsbedarf reduziert wird, der sich beispielsweise durch den Austausch von Dichtungsringen ergeben kann. Bevorzugt ist entsprechend eine erfindungsgemäße Multisegmentrolle, wobei zumindest eines der Dichtungselemente, bevorzugt sämtliche Dichtungselemente, als Dichtungskolben ausgeführt sind.

Besonders vorteilhaft an Dichtungskolben als Dichtungselementen ist, dass diese auch mit mehreren Dichtungsbereichen ausgeführt werden können, so dass ein Teil des Dichtungskolbens beispielsweise als Dichtungselement der Einstellung des Druckbereichs dient und dass der andere Teil des Dichtungskolbens gleichzeitig dem Verschluss der Fluidführungsausnehmung nach Außen dient. Die Länge des Druckbereichs wird in diesem Fall beispielsweise durch die Länge des Dichtungskolbens bestimmt.

Zur Umsetzung der reversiblen und zerstörungsfreien Verschiebung der Dichtungselemente in der Fluidführungsausnehmung stehen dem Fachmann grundsätzlich verschiedene Optionen offen, wobei sich dies nach Einschätzung der Erfinder besonders zuverlässig und effizient realisieren lässt, wenn die Fluidführungsausnehmung abgesehen von den Durchlassöffnungen zu den Kolbenausnehmungen sowie den Fluideinlässen zumindest eine, bevorzugt zwei, Öffnungen umfasst, wie es beispielsweise der Fall ist, wenn sich die Fluidführungsausnehmung wie vorstehend beschrieben vollständig durch den Grundkörper erstreckt.

Im Zuge der Entwicklung ist es den Erfindern gelungen, ein besonders leistungsfähiges System für die Positionsveränderung der Dichtungselemente zu entwickeln. In der Praxis hat sich nämlich eine Gewindeanordnung als besonders vorteilhaft erwiesen, wobei die Position der Dichtungselemente durch Rotation einer Gewindestange verändert werden kann. Insoweit ist es nach Einschätzung der Erfinder besonders vorteilhaft, wenn zudem Fixierungselemente zur Unterbindung der Rotation des Dichtungselements vorgesehen werden, sodass infolge der fehlenden Möglichkeit zur Rotation die Drehung der Gewindestange in dem Gewinde des Dichtungselements zu einer Verschiebung der Position entlang der Gewindestange führt. Hierdurch ist es in synergistischer Weise möglich, die Position der Dichtungselemente zu verändern, ohne die Gewindestange in die Fluidführungsausnehmung hinein- und hinauszuführen, womit ein verringerter Platzbedarf verbunden ist und gleichzeitig über die Rotation der Gewindestange die Position des Dichtungselements in der Fluidführungsausnehmung präzise einzustellen.

Bevorzugt ist daher eine erfindungsgemäße Multisegmentrolle, wobei die Position von zumindest einem der Dichtungselemente, bevorzugt von sämtlichen Dichtungselementen, in der Fluidführungsausnehmung, durch eine Gewindeanordnung, bevorzugt durch eine separate Gewindeanordnung für jedes Dichtungselement, verändert werden kann, wobei die Gewindeanordnung bevorzugt ein oder mehrere Fixierungselemente zur Unterbindung der Rotation des einen oder der mehreren Dichtungselemente umfasst, um eine Bewegung entlang einer rotierenden Gewindestange zu ermöglichen.

Insbesondere in der vorstehend beschriebenen Ausführungsform mit einer Gewindeanordnung ist es nach Einschätzung der Erfinder besonders vorteilhaft, Positionsanzeiger vorzusehen, über die die derzeit bestehende Position der Dichtungselemente in der Fluidführungsausnehmung ablesbar ist, wobei solche Ausgestaltungen besonders bevorzugt sind, in denen die Positionsanzeiger zudem dazu eingerichtet sind, beispielsweise über die Rotation einer Gewindestange, die Position der Dichtungselemente gemäß einer vorgegebenen Einstellung auch zu verändern. Bevorzugt ist insoweit eine erfindungsgemäße Multisegmentrolle, wobei die Position von zumindest einem der Dichtungselemente, bevorzugt von sämtlichen Dichtungselementen, in der Fluidführungsausnehmung, jeweils durch eine analogen oder digitalen, bevorzugt analogen, Positionsanzeiger eingestellt werden kann, wobei der oder die Positionsanzeiger bevorzugt Bestandteil von Verschlusselementen für die Öffnungen der Fluidführungsausnehmung sind.

Bei der Konzeption der erfindungsgemäßen Multisegmentrolle hat es sich als vorteilhaft erwiesen, wenn die Dichtungselemente unabhängig voneinander bewegt werden können, wobei für Anwendungen, in denen lediglich spiegelsymmetrische Reifenkomponenten verarbeitet werden sollen, zumindest prinzipiell auch eine einfache Auslegung mit einer simultanen Verstellung sämtlicher Dichtungselemente denkbar ist.

Bevorzugt ist daher eine erfindungsgemäße Multisegmentrolle, wobei die Position von zumindest zwei, bevorzugt sämtlichen Dichtungselementen in der Fluidführungsausnehmung, unabhängig voneinander verändert werden kann. Bevorzugt ist auch eine erfindungsgemäße Multisegmentrolle, wobei die Position von zumindest einem der Dichtungselemente, bevorzugt von beiden Dichtungselementen in der Fluidführungsausnehmung stufenlos einstellbar ist.

Um nach Einstellung eines gewünschten Druckprofils einen zuverlässigen Betrieb sicherzustellen, ist es nach Einschätzung der Erfinder vorteilhaft, Maßnahmen vorzusehen, um die eingestellten Abmessungen der Druckbereiche zumindest temporär fixieren zu können. Bevorzugt ist somit eine erfindungsgemäße Multisegmentrolle, wobei die Position von zumindest einem der Dichtungselemente, bevorzugt von sämtlichen Dichtungselementen, in der Fluidführungsausnehmung durch ein Verschlusselement fixiert werden kann.

Der Fachmann versteht, dass die Erfindung ebenfalls eine Reifenaufbaumaschine betrifft, umfassend eine erfindungsgemäße Multisegmentrolle als Applizierungsrolle.

Bevorzugt ist insoweit eine erfindungsgemäße Reifenaufbaumaschine, zusätzlich umfassend eine Reifenaufbautrommel.

Bevorzugt ist zudem eine erfindungsgemäße Reifenaufbaumaschine, zusätzlich umfassend eine Halterung für die Multisegmentrolle, wobei die Halterung dazu eingerichtet ist, dass die Position der Multisegmentrolle relativ zu der Reifenaufbaumaschine reversibel und zerstörungsfrei verändert werden kann, bevorzugt automatisch.

Die Erfindung betrifft auch ein Verfahren zur Herstellung eines Fahrzeugreifenrohlings mit einer erfindungsgemäßen Multisegmentrolle oder einer erfindungsgemäßen Reifenaufbaumaschine, umfassend die Verfahrensschritte:
A) Herstellen oder Bereitstellen einer strangförmigen Reifenkomponente mit einer Materialbeschaffenheit X;
B) Herstellen oder Bereitstellen eines Reifengrundrohlings mit einer geometrischen Oberflächenbeschaffenheit Y, bevorzugt auf einer Reifenaufbautrommel,
C) Verändern der Position der zwei oder mehr Dichtungselemente in der Fluidführungsausnehmung der Multisegmentrolle zur Einstellung der Abmessungen der drei oder mehr verschiedenen Druckbereiche an die Materialbeschaffenheit X und/oder die geometrischen Oberflächenbeschaffenheit Y, und Einführen eines Arbeitsfluids in die Druckbereiche durch die Fluideinlässe zur Bewegung der Hubkolben und zur Einstellung der Position der Trägerscheiben in drei oder mehr Bereichen zum Erhalt einer angepassten Multisegmentrolle, wobei sich der Druck des Arbeitsfluids in den Druckbereichen zumindest teilweise unterscheidet, und
D) Anrollen der strangförmigen Reifenkomponente an den Reifengrundrohling mit der angepassten Multisegmentrolle zum Erhalt eines Fahrzeugreifenrohlings.

Bei der Materialbeschaffenheit X kann es sich hierbei prinzipiell um jede Eigenschaft der strangförmigen Reifenkomponente handeln, insbesondere strukturelle Eigenschaften und/oder mechanische Eigenschaften und/oder physikalisch-chemische Eigenschaften, insbesondere solche Eigenschaften, welche quer zur Längsrichtung ein ungleichmäßiges Profil aufweisen. Diese Materialbeschaffenheit X hat einen Einfluss darauf, wie sich die strangförmige Reifenkomponente unter Druckapplikation verhält und beschreibt somit eben jenen Aspekt, auf den die erfindungsgemäße Multisegmentrolle in Verfahrensschritt C) eingestellt wird.

Die vorstehenden Ausführungen gelten dabei grundsätzlich auch für die Oberflächenbeschaffenheit Y des Reifengrundrohlings, d. h. eines Teils des Fahrzeugreifenrohlings, auf dem die strangförmige Reifenkomponente noch anzuordnen ist, wobei hinsichtlich der Oberflächenbeschaffenheit Y vor allem die strukturellen Eigenschaften, insbesondere die Kontur der Oberfläche im Vordergrund stehen. Insgesamt ist die Anpassung der erfindungsgemäßen Multisegmentrolle an die Materialbeschaffenheit X regelmäßig wichtiger als die Anpassung an die geometrische Oberflächenbeschaffenheit Y.

Beispielhaft ist hierbei ein erfindungsgemäßes Verfahren, wobei die strangförmige Komponente ausgewählt ist aus der Gruppe bestehend aus Karkasslagen, Gürtellagen und Laufstreifen.

Beispielhaft ist auch ein erfindungsgemäßes Verfahren, wobei die Materialbeschaffenheit X ausgewählt ist aus der Gruppe bestehend aus Materialdicke, Materialdickenprofil, Materialbreite, Materialart und mechanischen Materialeigenschaften, insbesondere Materialfestigkeit und Materialelastizität.

Beispielhaft ist darüber hinaus ein erfindungsgemäßes Verfahren, wobei die geometrische Oberflächenbeschaffenheit Y Informationen über die Oberflächentopographie des Reifengrundrohlings und/oder die Krümmung der Oberfläche des Reifengrundrohlings umfasst.

Beispielhaft ist ein erfindungsgemäßes Verfahren, wobei das Arbeitsfluid ausgewählt ist aus der Gruppe bestehend aus Gasen, bevorzugt ausgewählt ist aus der Gruppe bestehend aus Luft, Sauerstoff, Stickstoff und Edelgasen, wobei das Arbeitsfluid besonders bevorzugt Luft ist.

Die Erfindung betrifft ebenfalls ein Verfahren zur Herstellung eines Fahrzeugreifens, umfassend die Verfahrensschritte des erfindungsgemäßen Verfahrens zur Herstellung eines Fahrzeugreifenrohlings, sowie den Verfahrensschritt:
E) Vulkanisieren des Fahrzeugreifenrohlings zum Erhalt eines Fahrzeugreifens.

Die Erfindung betrifft zudem die Verwendung einer erfindungsgemäßen Multisegmentrolle oder einer erfindungsgemäßen Reifenaufbaumaschine, bei der Herstellung eines Fahrzeugreifenrohlings zur Steigerung der Präzision bei der Applizierung von Reifenbauteilen und/oder zur Verbesserung der Spleißqualität, insbesondere in einem automatischen Spleißverfahren.

Nachfolgend werden bevorzugte Ausführungsformen der Erfindung unter Bezugnahme auf die beiliegenden Figuren näher erläutert und beschrieben. Dabei zeigen:
- Fig. 1: eine schematische Querschnittsdarstellung einer Trägerstruktur einer erfindungsgemäßen Multisegmentrolle in einer bevorzugten Ausführungsform;
- Fig. 2: eine schematische Darstellung einer Trägerstruktur einer erfindungsgemäßen Multisegmentrolle in einer ersten Ansicht;
- Fig. 3: eine schematische Darstellung der Trägerstruktur der Fig. 2 in einer zweiten Ansicht;
- Fig. 4: eine schematische Darstellung einer beispielhaften Gewindeanordnung; und
- Fig. 5: eine schematische Querschnittsdarstellung durch eine erfindungsgemäße Multisegmentrolle.

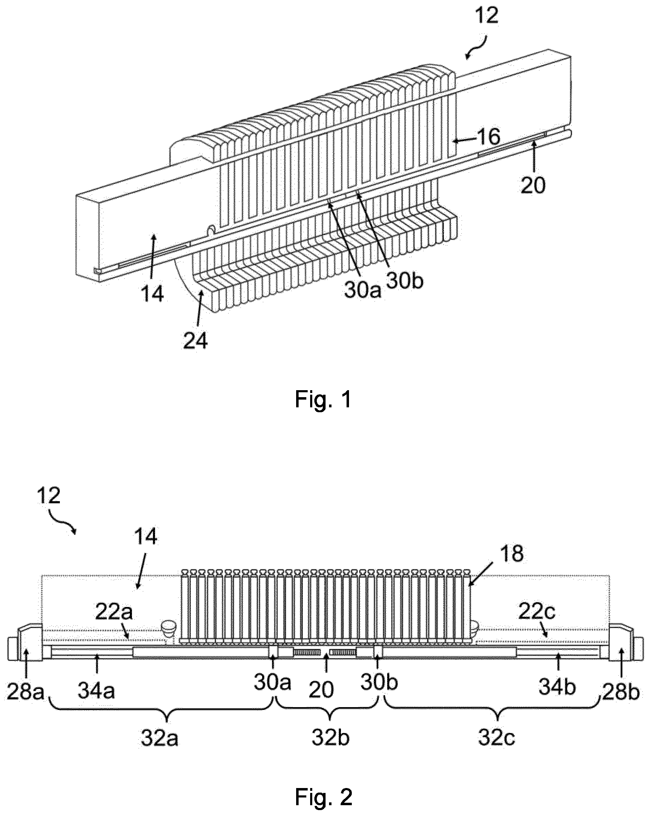

Fig. 1 zeigt eine schematische Darstellung eines Querschnitts durch eine Trägerstruktur 12 einer erfindungsgemäßen Multisegmentrolle für den Einsatz als Applizierungsrolle in einer Reifenaufbaumaschine in einer bevorzugten Ausführungsform, wobei die Hubkolben 18 in den Kolbenausnehmungen 16 sowie die am Ende der Fluidführungsausnehmung 20 vorgesehenen Positionsanzeiger 28a, 28b aus Gründen der Übersichtlichkeit nicht gezeigt sind.

Die Multisegmentrolle umfasst eine Trägerstruktur 12 mit einem länglichen Grundkörper 14, der im gezeigten Beispiel aus Stahl ausgebildet ist und mit Schrauben in einer Halteanordnung angeordnet werden kann. Der Grundkörper 14 hat einen rechteckigen Querschnitt.

Der Grundkörper 14 umfasst eine Fluidführungsausnehmung 20, welche sich als durchgehende Ausnehmung entlang des Grundkörpers 14 erstreckt und die bevorzugt kreisförmig ausgebildet ist wobei an den seitlichen Öffnungen der Fluidführungsausnehmung 20 bevorzugt Positionsanzeiger 28a, 28b angeordnet werden.

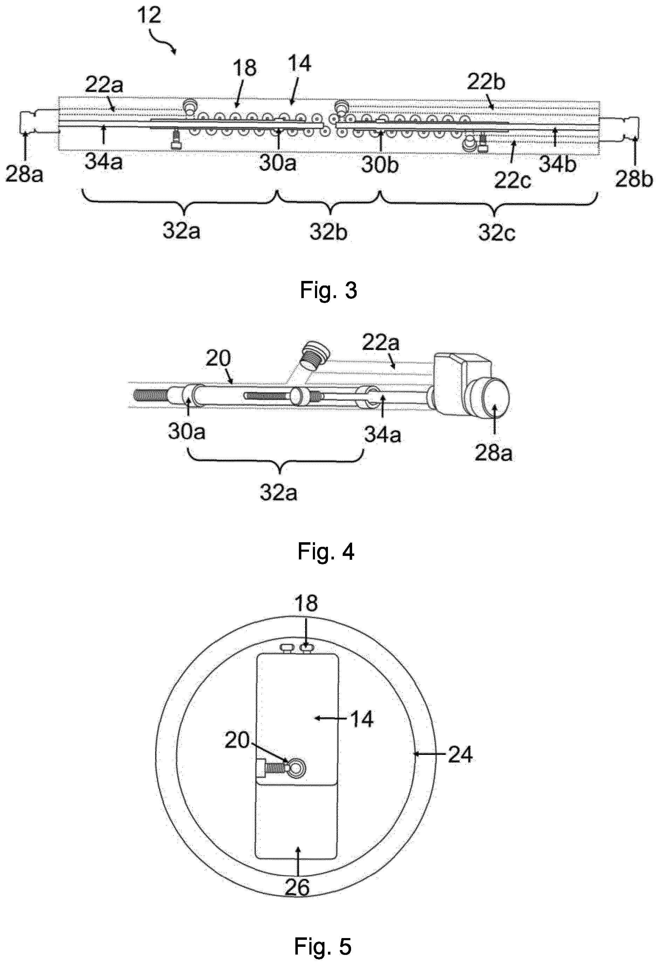

Wie in den Fig. 2 und 3 durch gestrichelte Linien angedeutet, umfasst der Grundkörper 14 drei mit der Fluidführungsausnehmung 20 verbundene Fluideinlässe 22a, 22b, 22c, welche über weite Teile parallel zur Fluidführungsausnehmung 20 innerhalb des Grundkörpers 14 verlaufen, wobei die fluidleitende Verbindung zwischen den Fluideinlässen 22a-c und der Fluidführungsausnehmung 20 durch seitliche Bohrungen hergestellt wird, welche im gezeigten Beispiel jeweils mit einer Dichtung verschlossen sind. In der Fig. 3 sind die Konturen der Fluidführungsausnehmung 20 aus Gründen der Übersichtlichkeit nicht eingezeichnet.

Darüber hinaus sind im Grundkörper 14 insgesamt vierunddreißig Kolbenausnehmungen 16 vorgesehen, welche mit der Fluidführungsausnehmung 20 über jeweils eine Durchlassöffnung verbunden sind und sich in Richtung der Fluidführungsausnehmung 20 verjüngen. Die Kolbenausnehmungen 16 sind, wie in der Ansicht der Fig. 3 erkennbar, in zwei Reihen äquidistant angeordneter Kolbenausnehmungen 16 versetzt zueinander so im Mittelbereich des Grundkörper 14 angeordnet, dass dieser an den Seitenbereichen mit einem Überstand versehen ist, der die Handhabung der Multisegmentrolle und die Anbringung von weiteren Komponenten, beispielsweise Steuerungseinheiten oder Teilen des Fluidführungssystems, erleichtert.

Die Trägerstruktur 12 umfasst in den Kolbenausnehmungen 16 vierunddreißig Hubkolben 18, sodass eine Kolbenausnehmung 16 genau einen Hubkolben 18 enthält. Die Trägerstruktur 12 umfasst außerdem vierunddreißig miteinander auf Stoß liegende Trägerscheiben 24. Die parallel zueinander angeordneten Trägerscheiben 24 verlaufen dabei um den Grundkörper 14 herum, sodass die Längsrichtung des Grundkörpers 14 parallel zur Flächennormalen der Trägerscheiben 24 verläuft. Auf den Trägerscheiben 24 sind im Betrieb kugelgelagerte Rollen angeordnet.

Wie in Fig. 5 zu sehen, ist im Inneren der Trägerscheiben 24 jeweils eine Aussparung 26 vorgesehen, die so bemessen ist, dass die Trägerscheiben 24 relativ zum Grundkörper 14 beweglich sind.

Die Position der Trägerscheiben 24 relativ zum Grundkörper 14 wird dabei durch die Hubbewegung der Hubkolben 18 verändert. Im gezeigten Beispiel ist jeder Trägerscheibe 24 ein separater Hubkolben 18 zugewiesen. Insofern liegt jede Trägerscheibe 24 auch auf der Höhe genau einer Kolbenausnehmung 16. Die Form der Aussparung 26 ist so bemessen, dass der Grundkörper 14 über die gesamte Hubbewegung hinweg seitlich von der Trägerscheibe 24 kontaktiert wird und bei minimalem und maximalem Hub jeweils an drei Seiten formschlüssig eingefasst wird.

Die beispielhafte Multisegmentrolle umfasst in der Fluidführungsausnehmung 20 zwei als Dichtungskolben ausgeführte Dichtungselemente 30a, 30b, welche die Fluidführungsausnehmung 20 lokal fluiddicht abdichten. Dies bedeutet, dass durch die zwei Dichtungselemente 30a-b, drei Druckbereiche 32a, 32b, 32c gebildet werden, wobei entlang der Fluidführungsausnehmung 20 kein Fluidaustausch aus einem Druckbereich 32a-c in den nebenliegenden Druckbereich 32a-c möglich ist. Die Kolbenausnehmungen 16 und damit die Hubkolben 18 sind jeweils mit einem der Druckbereiche 32a-c fluidleitend verbunden, wobei in jeden der drei Druckbereiche 32a-c ein Arbeitsfluid über einen Fluideinlass 22a-c eingeführt werden kann.

Die Dichtungselemente 30a-b weisen im gezeigten Beispiel jeweils einen Dichtungsbereich auf, welcher als Dichtungselement 30a-b der Einstellung der Druckbereiche 32a-c dient und im gezeigten Beispiel einen O-Ring als Dichtungselement umfasst. Grundsätzlich können die als Dichtungskolben ausgeführten Dichtungselemente 30a-b jedoch auch zwei Dichtungsbereiche aufweisen, wobei der äußere Dichtungsbereich des Dichtungskolbens die Fluidführungsausnehmung 20 nach Außen abschließen würde, so dass die Länge der äußeren beiden Druckbereiche 32a-c in diesem Fall mit dem Abstand zwischen den Dichtungsbereichen der Dichtungskolben korrelieren würde. Im gezeigten Beispiel dienen allerdings separate Dichtungsmittel in den Außenbereichen der Fluidführungsausnehmung 20, vor den Positionsanzeigern 28a-b, der Abdichtung der Fluidführungsausnehmung 20 nach außen.

Die Position der Dichtungselemente 30a-b kann im gezeigten Beispiel durch eine Gewindeanordnung verändert werden, nämlich jeweils durch Rotation einer Gewindestange 34a, 34b. Die Gewindeanordnung umfasst hierfür jeweils Fixierungselemente zur Unterbindung der Rotation des jeweiligen Dichtungselements 30a-b, die besonders in Fig. 4 und 5 gut erkennbar sind, wobei insbesondere Fig. 4, die lediglich einen Teil der relevanten Element zeigt, die Konzeption der Gewindeanordnung gut erkennen lässt. Das Fixierungselement kann hierfür in eine längliche Führungsausnehmung eingreifen, die sich abschnittsweise an der Seite des Dichtungskolbens erstreckt.

Infolge der fehlenden Möglichkeit zur Rotation sorgt die Drehung der Gewindestange 34a-b in dem Gewinde des Dichtungselements 30a-b für eine Verschiebung der Position entlang der Gewindestange 34a-b. Durch die zwei separaten Gewindeanordnungen können die Dichtungselemente 30a-b unabhängig voneinander bewegt werden, wobei ihre Position jeweils stufenlos einstellbar ist. Wie besonders in Fig. 4 sichtbar, umfasst die Multisegmentrolle für die Einstellung analoge Positionsanzeiger 28a-b, über welche die derzeit eingestellte Position der Dichtungselemente 30a-b in der Fluidführungsausnehmung 20 ablesbar ist und über deren Drehschrauben auch die Gewindestange 34a-b bewegt und die Position der Dichtungselemente 30a-b eingestellt werden kann. Die so eingestellten Positionen der Dichtungselemente 30a-b können im gezeigten Beispiel jeweils durch Verschlusselemente in der Fluidführungsausnehmung 20 fixiert werden.

Für die Verwendung der Multisegmentrolle in einer Reifenaufbaumaschine wird zunächst eine strangförmige Reifenkomponente, beispielsweise eine Gürtellage, mit einer Materialbeschaffenheit X und ein Reifengrundrohling, beispielsweise eine auf einer Reifenaufbautrommel angeordnete Reifenkarkasse, mit einer geometrischen Oberflächenbeschaffenheit Y hergestellt bzw. bereitgestellt. Der Einsatz der Multisegmentrolle in der Reifenaufbaumaschine erfolgt nun derart, dass die Position der Dichtungselemente 30a-b in der Fluidführungsausnehmung 20 so angepasst wird, dass die Abmessungen der Druckbereiche 32a-c zu der Materialbeschaffenheit X der zu applizierenden strangförmigen Reifenkomponente passen, beispielsweise um Elastizitätsgradienten in der Gürtellage zu berücksichtigen. Alternativ oder zusätzlich erfolgt der Einsatz derart, dass die Abmessungen der Druckbereiche 32a-c zu der Oberflächenbeschaffenheit Y des Reifengrundrohlings passen, beispielsweise um lokale Dickenunterschiede der Karkasse zu berücksichtigen.

Nach der Anpassung wird ein Arbeitsfluid, beispielsweise Luft, durch die Fluideinlässe 22a-c in die Druckbereiche 32a-c eingeführt, um eine Bewegung der Hubkolben 18 und eine Einstellung der Position der Trägerscheiben 24 in den drei Druckbereichen 32a-c bzw. des auf die Trägerscheiben 24 wirkenden Druckes zu veranlassen. Hierbei werden die Druckbereiche 32a-c beispielsweise mit verschiedenen Drücken beaufschlagt, um eine angepasste Multisegmentrolle zu erhalten, die beim Applizieren ein optimales Druckprofil ausbildet. Das gewünschte Druckprofil, welches also auf die Materialbeschaffenheit X und/oder die Oberflächenbeschaffenheit Y abgestimmt ist, wird beim Anrollen der strangförmigen Reifenkomponente an den Reifengrundrohling mit der angepassten Multisegmentrolle realisiert.

### Bezugszeichenliste

- 12: Trägerstruktur
- 14: Grundkörper
- 16: Kolbenausnehmungen
- 18: Hubkolben
- 20: Fluidführungsausnehmung
- 22a-c: Fluideinlass
- 24: Trägerscheiben
- 26: Aussparung
- 28a-b: Positionsanzeiger
- 30a-b: Dichtungselement
- 32a-c: Druckbereich
- 34a-b: Gewindestange

## Patentansprüche

1. Multisegmentrolle für den Einsatz als Applizierungsrolle in einer Reifenaufbaumaschine, mit einer Trägerstruktur (12) umfassend:
a) einen Grundkörper (14), umfassend:
i) eine Fluidführungsausnehmung (20),
ii) fünf oder mehr Kolbenausnehmungen (16), welche jeweils fluidleitend mit der Fluidführungsausnehmung (20) verbunden sind, und
iii) drei oder mehr Fluideinlässe (22a-c), welche jeweils fluidleitend mit der Fluidführungsausnehmung (20) verbunden sind,
b) fünf oder mehr Hubkolben (18), welche jeweils so in den Kolbenausnehmungen (16) angeordnet sind, dass sie in Folge eines Druckanstiegs in der Fluidführungsausnehmung (20) eine Hubbewegung ausführen können, und
c) fünf oder mehr Trägerscheiben (24), welche jeweils eine innenliegende Aussparung (26) aufweisen,
wobei sich der Grundkörper (14) so durch die innenliegenden Aussparungen (26) der Trägerscheiben (24) erstreckt, dass die Trägerscheiben (24) jeweils auf Höhe zumindest einer Kolbenausnehmung (16) angeordnet sind, wobei die innenliegenden Aussparungen (26) so bemessen sind, dass die Position der Trägerscheiben (24) relativ zum Grundkörper (14) jeweils durch die Hubbewegung zumindest eines der Hubkolben (18) verändert werden kann,
wobei die Multisegmentrolle in der Fluidführungsausnehmung (20) zwei oder mehr Dichtungselemente (30a, 30b) zur fluiddichten Abdichtung der Fluidführungsausnehmung (20) umfasst, durch die die Fluidführungsausnehmung (20) in drei oder mehr voneinander getrennte Druckbereiche (32a-c) unterteilt wird, die jeweils mit zumindest einem der Fluideinlässe (22a-c) verbunden sind, sodass die Kolbenausnehmungen (16) jeweils mit einem der Druckbereiche (32) fluidleitend verbunden sind, **dadurch gekennzeichnet dass**
die Multisegmentrolle dazu eingerichtet ist, dass die Position der zwei oder mehr Dichtungselemente (30a-b) in der Fluidführungsausnehmung (20) reversibel und zerstörungsfrei verändert werden kann, um die Abmessungen der Druckbereiche (32a-c) zu verändern.

2. Multisegmentrolle nach Anspruch 1, wobei sich die Fluidführungsausnehmung (20) als durchgehende Ausnehmung durch den Grundkörper (14) erstreckt, wobei die Kolbenausnehmungen (16) bevorzugt orthogonal zu der Fluidführungsausnehmung (20) verlaufen.

3. Multisegmentrolle nach einem der Ansprüche 1 oder 2, wobei die Kolbenausnehmungen (16) in zwei oder mehr Reihen, bevorzugt in zwei oder mehr Reihen von äquidistant voneinander beabstandeten Kolbenausnehmungen (16), angeordnet sind, wobei die Kolbenausnehmungen (16) benachbarter Reihen bevorzugt zueinander versetzt angeordnet sind.

4. Multisegmentrolle nach einem der Ansprüche 1 bis 3, wobei die innenliegenden Aussparungen (26) der Trägerscheiben (24) jeweils ein erstes Fixierelement umfassen und wobei die für den Kontakt mit den Trägerscheiben (24) vorgesehenen Enden der Hubkolben (18) jeweils ein zweites Fixierelement umfassen, wobei die Trägerscheiben (24) mit den Hubkolben (18) über die ersten Fixierelemente und die zweiten Fixierelemente verbunden sind.

5. Multisegmentrolle nach einem der Ansprüche 1 bis 4, wobei die Multisegmentrolle in der Fluidführungsausnehmung (20) genau zwei Dichtungselemente (30a-b) umfasst, und/oder wobei die Fluidführungsausnehmung (20) durch die Dichtungselemente (30a-b) in genau drei voneinander getrennte Druckbereiche (32a-c) unterteilt wird.

6. Multisegmentrolle nach einem der Ansprüche 1 bis 5, wobei zumindest eines der Dichtungselemente (30a-b), bevorzugt sämtliche Dichtungselemente (30a-b), als Dichtungskolben ausgeführt sind.

7. Multisegmentrolle nach einem der Ansprüche 1 bis 6, wobei die Position von zumindest einem der Dichtungselemente (30a-b), in der Fluidführungsausnehmung (20), durch eine Gewindeanordnung verändert werden kann, bevorzugt stufenlos, wobei die Gewindeanordnung besonders bevorzugt ein oder mehrere Fixierungselemente zur Unterbindung der Rotation des einen oder der mehreren Dichtungselemente (30a-b) umfasst, um eine Bewegung entlang einer rotierenden Gewindestange (34a-b) zu ermöglichen.

8. Multisegmentrolle nach einem der Ansprüche 1 bis 7, wobei die Position von zumindest einem der Dichtungselemente (30a-b) in der Fluidführungsausnehmung (20), jeweils durch eine analogen oder digitalen, bevorzugt analogen, Positionsanzeiger (28a-b) eingestellt werden kann, wobei der oder die Positionsanzeiger (28a-b) bevorzugt Bestandteil von Verschlusselementen für die Öffnungen der Fluidführungsausnehmung (20) sind.

9. Multisegmentrolle nach einem der Ansprüche 1 bis 8, wobei die Position von zumindest zwei, bevorzugt sämtlichen Dichtungselementen (30a-b) in der Fluidführungsausnehmung (20), unabhängig voneinander verändert werden kann.

10. Reifenaufbaumaschine, umfassend eine Multisegmentrolle nach einem der Ansprüche 1 bis 9 als Applizierungsrolle.

11. Verfahren zur Herstellung eines Fahrzeugreifenrohlings mit einer Multisegmentrolle nach einem der Ansprüche 1 bis 9 oder einer Reifenaufbaumaschine nach Anspruch 10, umfassend die Verfahrensschritte:
A) Herstellen oder Bereitstellen einer strangförmigen Reifenkomponente mit einer Materialbeschaffenheit X;
B) Herstellen oder Bereitstellen eines Reifengrundrohlings mit einer geometrischen Oberflächenbeschaffenheit Y, bevorzugt auf einer Reifenaufbautrommel,
C) Verändern der Position der zwei oder mehr Dichtungselemente (30) in der Fluidführungsausnehmung (20) der Multisegmentrolle zur Einstellung der Abmessungen der drei oder mehr verschiedenen Druckbereiche (32a-c) an die Materialbeschaffenheit X und/oder die geometrischen Oberflächenbeschaffenheit Y, und Einführen eines Arbeitsfluids in die Druckbereiche (32a-c) durch die Fluideinlässe (22a-c) zur Bewegung der Hubkolben (18) und zur Einstellung der Position der Trägerscheiben (24) in drei oder mehr Bereichen zum Erhalt einer vorkonturierten angepassten Multisegmentrolle, wobei sich der Druck des Arbeitsfluids in den Druckbereichen (32a-c) zumindest teilweise unterscheidet, und
D) Anrollen der strangförmigen Reifenkomponente an den Reifengrundrohling mit der angepassten Multisegmentrolle zum Erhalt eines Fahrzeugreifenrohlings.

12. Verfahren zur Herstellung eines Fahrzeugreifens, umfassend die Verfahrensschritte des Verfahrens zur Herstellung eines Fahrzeugreifenrohlings nach Anspruch 11, sowie den Verfahrensschritt:
E) Vulkanisieren des Fahrzeugreifenrohlings zum Erhalt eines Fahrzeugreifens.

## Claims

1. Multi-segment roller for use as an application roller in a tyre-building machine, having a carrier structure (12) which comprises:
a) a main body (14) comprising:
i) a fluid-guiding cutout (20),
ii) five or more piston cutouts (16), which are respectively connected in a fluid-conducting manner to the fluid-guiding cutout (20), and
iii) three or more fluid inlets (22a-c), which are respectively connected in a fluid-conducting manner to the fluid-guiding cutout (20),
b) five or more pistons (18), which are respectively arranged in the piston cutouts (16) in such a way that, as a result of a pressure increase in the fluid-guiding cutout (20), they are able to perform a stroke movement, and
c) five or more carrier plates (24), which respectively have an inner clearance (26),
wherein the main body (14) extends through the inner clearances (26) of the carrier plates (24) in such a way that the carrier plates (24) are respectively arranged at the height of at least one piston cutout (16), wherein the inner clearances (26) are dimensioned such that the position of the carrier plates (24) relative to the main body (14) can be respectively changed by the stroke movement of at least one of the pistons (18),
wherein the multi-segment roller comprises in the fluid-guiding cutout (20) two or more sealing elements (30a, 30b) for fluid-tight sealing of the fluid-guiding cutout (20), by way of which sealing elements the fluid-guiding cutout (20) is subdivided into three or more mutually separate pressure regions (32a-c) which are respectively connected to at least one of the fluid inlets (22a-c), so that the piston cutouts (16) are respectively connected in a fluid-conducting manner to one of the pressure regions (32), **characterized in that** the multi-segment roller is configured to allow the position of the two or more sealing elements (30a-b) in the fluid-guiding cutout (20) to be changed in a reversible and non-destructive manner in order to change the dimensions of the pressure regions (32a-c).

2. Multi-segment roller according to Claim 1, wherein the fluid-guiding cutout (20) extends as a continuous cutout through the main body (14), wherein the piston cutouts (16) preferably run orthogonally to the fluid-guiding cutout (20).

3. Multi-segment roller according to either of Claims 1 and 2, wherein the piston cutouts (16) are arranged in two or more rows, preferably in two or more rows of piston cutouts (16) spaced apart equidistantly from one another, wherein the piston cutouts (16) of adjacent rows are preferably arranged offset from one another.

4. Multi-segment roller according to one of Claims 1 to 3, wherein the inner clearances (26) of the carrier plates (24) respectively comprise a first fixing element, and wherein the ends of the pistons (18) intended for contact with the carrier plates (24) respectively comprise a second fixing element, wherein the carrier plates (24) are connected to the pistons (18) via the first fixing elements and the second fixing elements.

5. Multi-segment roller according to one of Claims 1 to 4, wherein the multi-segment roller comprises in the fluid-guiding cutout (20) exactly two sealing elements (30a-b), and/or wherein the fluid-guiding cutout (20) is subdivided by the sealing elements (30a-b) into exactly three mutually separate pressure regions (32a-c).

6. Multi-segment roller according to one of Claims 1 to 5, wherein at least one of the sealing elements (30a-b), preferably all the sealing elements (30a-b), are designed as sealing pistons.

7. Multi-segment roller according to one of Claims 1 to 6, wherein the position of at least one of the sealing elements (30a-b), in the fluid-guiding cutout (20), can be changed by way of a threaded arrangement, preferably in a continuously variable manner, wherein the threaded arrangement particularly preferably comprises one or more fixing elements for preventing the rotation of the one or more sealing elements (30a-b) in order to allow a movement along a rotating threaded rod (34a-b).

8. Multi-segment roller according to one of Claims 1 to 7, wherein the position of at least one of the sealing elements (30a-b) in the fluid-guiding cutout (20) can be respectively set by way of an analogue or digital, preferably analogue, position indicator (28a-b), wherein the position indicator(s) (28a-b) is/are preferably a constituent part of closure elements for the openings of the fluid-guiding cutout (20).

9. Multi-segment roller according to one of Claims 1 to 8, wherein the position of at least two, preferably all the, sealing elements (30a-b) in the fluid-guiding cutout (20) can be changed in a mutually independent manner.

10. Tyre-building machine, comprising a multi-segment roller according to one of Claims 1 to 9 as an application roller.

11. Method for producing a green vehicle tyre using a multi-segment roller according to one of Claims 1 to 9 or a tyre-building machine according to Claim 10, comprising the method steps of:
A) producing or providing a tyre component in strip form having a material property X;
B) producing or providing a basic green tyre having a geometrical surface property Y, preferably at a tyre-building drum,
C) changing the position of the two or more sealing elements (30) in the fluid-guiding cutout (20) of the multi-segment roller for the purpose of setting the dimensions of the three or more different pressure regions (32a-c) according to the material property X and/or the geometrical surface property Y, and introducing a working fluid into the pressure regions (32a-c) through the fluid inlets (22a-c) for the purpose of moving the pistons (18) and of setting the position of the carrier plates (24) in three or more regions in order to obtain a pre-contoured adapted multi-segment roller, wherein the pressure of the working fluid at least partially differs in the pressure regions (32a-c), and
D) rolling the tyre component of strip form onto the basic green tyre using the adapted multi-segment roller in order to obtain a green vehicle tyre.

12. Method for producing a vehicle tyre, comprising the method steps of the method for producing a green vehicle tyre according to Claim 11, as well as the method step of:
E) vulcanizing the green vehicle tyre in order to obtain a vehicle tyre.

## Revendications

1. Rouleau multisegment pour une utilisation en tant que rouleau d'application dans une machine de confection de pneus, avec une structure de support (12) comprenant :
a) un corps de base (14), comprenant :
i) un évidement de guidage de fluide (20),
ii) cinq évidements de piston (16) ou plus, qui sont chacun reliés fluidiquement à l'évidement de guidage de fluide (20), et
iii) trois entrées de fluide (22a-c) ou plus, qui sont chacune reliées fluidiquement à l'évidement de guidage de fluide (20),
b) cinq pistons de levage (18) ou plus, qui sont chacun agencés dans les évidements de piston (16) de manière à pouvoir effectuer un mouvement de levage en conséquence d'une augmentation de pression dans l'évidement de guidage de fluide (20), et
c) cinq disques de support (24) ou plus, qui présentent chacun une échancrure intérieure (26),
le corps de base (14) s'étendant à travers les échancrures intérieures (26) des disques de support (24) de telle sorte que les disques de support (24) sont agencés respectivement au niveau d'au moins un évidement de piston (16), les échancrures intérieures (26) étant dimensionnées de telle sorte que la position des disques de support (24) par rapport au corps de base (14) peut être modifiée respectivement par le mouvement de levage d'au moins l'un des pistons de levage (18),
le rouleau multisegment comprenant, dans l'évidement de guidage de fluide (20), deux éléments d'étanchéité (30a, 30b) ou plus pour rendre étanche au fluide l'évidement de guidage de fluide (20), par lesquels l'évidement de guidage de fluide (20) est divisé en trois zones de pression (32a-c) ou plus séparées les unes des autres, qui sont chacune reliées à au moins l'une des entrées de fluide (22a-c), de telle sorte que les évidements de piston (16) sont chacun reliés fluidiquement à l'une des zones de pression (32), **caractérisé en ce que** le rouleau multisegment est adapté pour que la position des deux éléments d'étanchéité (30a-b) ou plus dans l'évidement de guidage de fluide (20) puisse être modifiée de manière réversible et non destructive afin de modifier les dimensions des zones de pression (32a-c).

2. Rouleau multisegment selon la revendication 1, dans lequel l'évidement de guidage de fluide (20) s'étend sous la forme d'un évidement continu à travers le corps de base (14), les évidements de piston (16) étant de préférence orthogonaux à l'évidement de guidage de fluide (20).

3. Rouleau multisegment selon l'une quelconque des revendications 1 ou 2, dans lequel les évidements de piston (16) sont agencés en deux rangées ou plus, de préférence en deux rangées ou plus d'évidements de piston (16) équidistants les uns des autres, les évidements de piston (16) de rangées voisines étant de préférence agencés en décalage les uns par rapport aux autres.

4. Rouleau multisegment selon l'une quelconque des revendications 1 à 3, dans lequel les échancrures intérieures (26) des disques de support (24) comprennent chacune un premier élément de fixation et dans lequel les extrémités des pistons de levage (18) prévues pour être en contact avec les disques de support (24) comprennent chacune un deuxième élément de fixation, les disques de support (24) étant reliés aux pistons de levage (18) par l'intermédiaire des premiers éléments de fixation et des deuxièmes éléments de fixation.

5. Rouleau multisegment selon l'une quelconque des revendications 1 à 4, dans lequel le rouleau multisegment comprend exactement deux éléments d'étanchéité (30a-b) dans l'évidement de guidage de fluide (20), et/ou dans lequel l'évidement de guidage de fluide (20) est divisé par les éléments d'étanchéité (30a-b) en exactement trois zones de pression (32a-c) séparées les unes des autres.

6. Rouleau multisegment selon l'une quelconque des revendications 1 à 5, dans lequel au moins l'un des éléments d'étanchéité (30a-b), de préférence tous les éléments d'étanchéité (30a-b), sont réalisés sous la forme de pistons d'étanchéité.

7. Rouleau multisegment selon l'une quelconque des revendications 1 à 6, dans lequel la position d'au moins l'un des éléments d'étanchéité (30a-b) dans l'évidement de guidage de fluide (20) peut être modifiée, de préférence de manière continue, par un agencement fileté, dans lequel l'agencement fileté comprend de manière particulièrement préférée un ou plusieurs éléments de fixation pour empêcher la rotation des un ou plusieurs éléments d'étanchéité (30a-b) afin de permettre un mouvement le long d'une tige filetée rotative (34a-b).

8. Rouleau multisegment selon l'une quelconque des revendications 1 à 7, dans lequel la position d'au moins l'un des éléments d'étanchéité (30a-b) dans l'évidement de guidage de fluide (20) peut être ajustée respectivement par un indicateur de position analogique ou numérique, de préférence analogique (28a-b), le ou les indicateurs de position (28a-b) faisant de préférence partie d'éléments d'obturation pour les ouvertures de l'évidement de guidage de fluide (20).

9. Rouleau multisegment selon l'une quelconque des revendications 1 à 8, dans lequel la position d'au moins deux, de préférence de tous les éléments d'étanchéité (30a-b) dans l'évidement de guidage de fluide (20), peut être modifiée indépendamment les uns des autres.

10. Machine de confection de pneus, comprenant un rouleau multisegment selon l'une quelconque des revendications 1 à 9 en tant que rouleau d'application.

11. Procédé de fabrication d'une ébauche de pneu de véhicule avec un rouleau multisegment selon l'une quelconque des revendications 1 à 9 ou une machine de confection de pneus selon la revendication 10, comprenant les étapes de procédé suivantes :
A) la fabrication ou la fourniture d'un composant de pneu en forme de boudin ayant une structure de matériau X ;
B) la fabrication ou la fourniture d'une ébauche de base de pneu ayant une structure de surface géométrique Y, de préférence sur un tambour de confection de pneus,
C) la modification de la position des deux éléments d'étanchéité (30) ou plus dans l'évidement de guidage de fluide (20) du rouleau multisegment pour ajuster les dimensions des trois zones de pression différentes (32a-c) ou plus à la structure de matériau X et/ou à la structure de surface géométrique Y, et l'introduction d'un fluide de travail dans les zones de pression (32a-c) à travers les entrées de fluide (22a-c) pour déplacer les pistons de levage (18) et pour ajuster la position des disques de support (24) dans trois zones ou plus afin d'obtenir un rouleau multisegment adapté pré-profilé, la pression du fluide de travail dans les zones de pression (32a-c) étant au moins partiellement différente, et
D) le fait de faire rouler le composant de pneu en forme de boudin sur l'ébauche de base de pneu avec le rouleau multisegment adapté pour obtenir une ébauche de pneu de véhicule.

12. Procédé de fabrication d'un pneu de véhicule, comprenant les étapes de procédé du procédé de fabrication d'une ébauche de pneu de véhicule selon la revendication 11, ainsi que l'étape de procédé suivante :
E) la vulcanisation de l'ébauche de pneu de véhicule pour obtenir un pneu de véhicule.
